# EUROPÄISCHE PATENTSCHRIFT

(11) **EP 2 466 406 B1**
(45) Veröffentlichungstag und Bekanntmachung des Hinweises auf die Patenterteilung: **02.03.2016**
(21) Anmeldenummer: 10195136.6
(22) Anmeldetag: 15.12.2010
(51) Int. Cl.: G05B 19/418, H04L 12/403

(54) **Verfahren zur automatischen Erzeugung von Dynamic Frame Packgruppen**
Method for automatically generating dynamic frame packing groups
Procédé de génération automatique de groupes de "dynamic frame packing"

(43) Veröffentlichungstag der Anmeldung: 20.06.2012
(73) Patentinhaber: Siemens Aktiengesellschaft, 80333 München (DE)
(72) Erfinder: Biehler, Georg, 90453 Nürnberg (DE)

(56) Entgegenhaltungen:
- EP-A1- 2 159 959
- DE-A1-102007 004 044
- ROBERT WILMES: "Dynamic Frame Packing (DFP) verleiht Profinet Flügel", INTERNET CITATION, 29. April 2009 (2009-04-29), Seiten 1-6, XP002635338, Gefunden im Internet: URL:http://www.elektroniknet.de/automation /technik-know-how/feldebene/ar ticle/1374/0/Dynamic_Frame_Packing_DFP_ver leiht_Profinet_Fluegel/?type=9 [gefunden am 2011-05-03]
- JASPERNEITE J ET AL: "A Proposal for a Generic Real-Time Ethernet System", IEEE TRANSACTIONS ON INDUSTRIAL INFORMATICS, IEEE SERVICE CENTER, NEW YORK, NY, US, Bd. 5, Nr. 2, 1. Mai 2009 (2009-05-01), Seiten 75-85, XP011255330, ISSN: 1551-3203
- DAVID GUNZINGER ET AL: "Optimising PROFINET IRT for fast cycle times: A proof of concept", FACTORY COMMUNICATION SYSTEMS (WFCS), 2010 8TH IEEE INTERNATIONAL WORKSHOP ON, IEEE, PISCATAWAY, NJ, USA, 18. Mai 2010 (2010-05-18), Seiten 35-42, XP031732754, ISBN: 978-1-4244-5460-0

## Beschreibung

Die Erfindung betrifft ein computerimplementiertes Verfahren zur automatisierten Erzeugung von Dynamic Frame Packgruppen für ein Automatisierungssystem, eine Vorrichtung zur automatisierten Erzeugung von Dynamic Frame Packgruppen für ein Automatisierungssystem sowie ein Computerprogrammprodukt.

Um in Automatisierungssystemen die Übertragungsgeschwindigkeit von Daten von Feldgeräten zu Controllern zu erhöhen, wurde das Konzept des Dynamic Frame Packing (DFP) eingeführt. Eine Datenübertragung erfolgt dabei unter Verwendung von Containerframes. Endgeräte, welche einer Packgruppe zugeordnet sind, übertragen dabei ihre Daten innerhalb dieses besagten Containerframes. Dadurch ergibt sich der Vorteil, dass der Overhead von verwendeten Ethernetframes für eine gegebene Übertragung nur einmalig zum Tragen kommt, da aufgrund des Containerframes lediglich zum Beispiel eine Präambel, ein Startframe Delimiter und ein Header zum Einsatz kommt. Dies ermöglicht, die Packdichte zu erhöhen, sodass innerhalb eines Taktzykluses eine Datenübertragung durch eine Vielzahl von Feldgeräten stattfinden kann, wobei die Aktualisierungsraten bezüglich der Übertragung signifikant erhöht ist im Vergleich zu einer Datenübertragung, welche DFP nicht verwenden würde.

In dem Dokument "Dynamic Frame Packaging (DFP) verleiht Profinet Flügel", von Robert Wilmes, (http://www.elektronik-net.de/automation/technik-know-how/feldebene/article/- 1374/0/Dynamic_Frame_Packaging_DFP_verleiht_Profinet_Fluegel/ ?type=9) wird diskutiert, dass die "Dynamic-Frame-Packaging"-Technik die bislang nicht optimale Übertragungsgeschwindigkeit des Echtzeit-Ethernet-Systems Profinet verbessert.

In dem Dokument "Jasperneite J. et al.: "A Proposal for a Genereic Real-Time Ethernet System", IEEE Transactions on Industrial Informatics, IEEE Service Center, New York, NY, US, Bd. 5, Nr. 2, 1. Mai 2009, Seiten 75-85" wird ferner eine neue Architektur für ein gerenisches Real-Time-Ethernet System vorgeschlagen, das die Adressierung auf Basis der Drei-Baustein-Topologie, einen optimierten Datagramm-Transfer und die synchrone Planung aufbauend auf die IEEE 802 Protokoll-Suite beinhaltet.

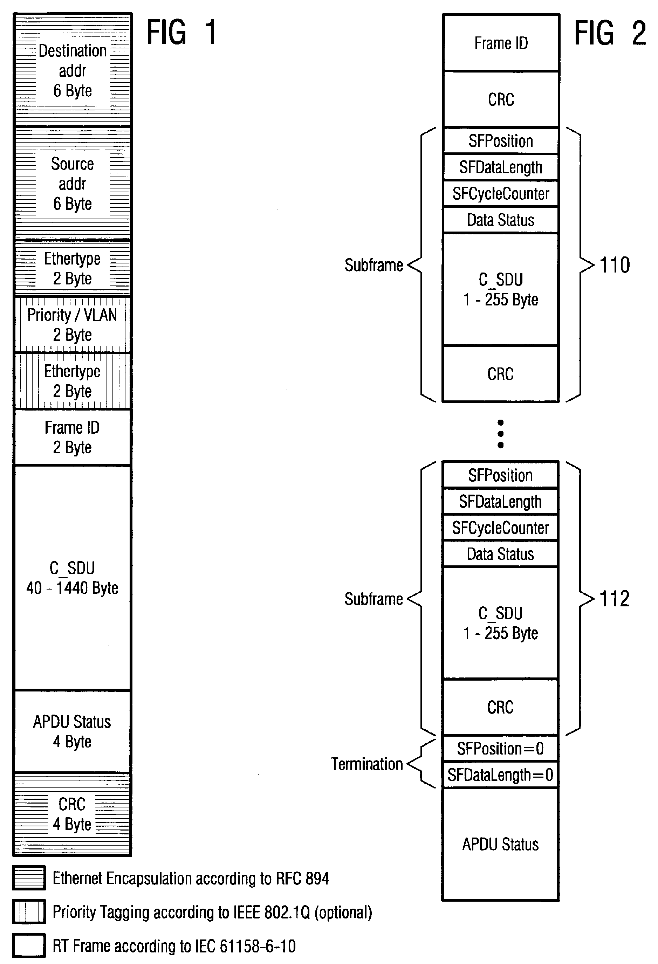

Die FIG 1 zeigt die Struktur eines typischen Echtzeitframes, wobei dieser Frame selbst für Ethernet-Übertragungen entsprechend RFC894 unter Verwendung der Elemente Zieladresse, Quelladresse, Ethertyp und CRC gekapselt ist. Im Falle des Verwendens von Priority Tagging entsprechend IEEE 802.1Q mit der Ethertyp auf 0x8100 gesetzt, gefolgt von einem Prioritäts-/VLAN-Feld, gefolgt von einem zweiten Ethertyp, welcher auf 0x8892 gesetzt ist und welcher einen Echtzeitframe anzeigt.

Die Frame-ID wird zur Kennzeichnung des Frames selber verwendet, wobei der C_SDU dazu bestimmt ist, den Inhalt der IO-Daten zu transportieren und der APDU-Status den Status des Frames angibt.

Der C_SDU kann dabei so strukturiert sein, dass er entweder die IO-Daten eines einzelnen Feldgerätes trägt oder dass er die IO-Daten mehrerer Feldgeräte trägt. Im letzteren Fall trägt ein Teil des C_SDU (genannt "Teilframes") die IO-Daten eines bestimmten Feldgerätes - der Frame ist in diesem Fall unterteilt in mehrere Teilframes.

Der Grund für die Verwendung einer Unterteilung in Frames ist die Minimierung der benötigten Bandbreite und konsequenter Weise die Optimierung der Leistung. Wie in FIG 1 gezeigt, beträgt der Overhead eines Frames, d.h. die zu transportierenden Bytes außerdem dem C_SDU 28 Bytes. Da jedoch zusätzlich der InterFrameGap 12 Bytes beträgt, die Präambel 7 Bytes beträgt und der Start Frame Delimiter 1 Byte beträgt und diese zusätzlich berücksichtigt werden müssen, summiert sich der Overhead eines Frames zu 48 Bytes (oder 42 Bytes wenn die Präambel auf 1 Byte verkürzt wird). Wenn der C_SDU zusätzlich kleiner als 40 Bytes ist, muss die Differenz zusätzlich hinzugefügt werden.

Damit ist ersichtlich, dass die Verwendung von unterteilten Frames die benötigte Bandbreite durch Kombination von Teilframes 110 und 112 reduziert, da, wie in FIG 2 gezeigt, der Overhead eines Teilframes lediglich 6 Bytes beträgt. Durch Kombination mehrerer Teilframes in einem einzelnen Frame wird somit der Overhead für den verwendeten Frame nur einmal fällig.

Jedem der besagten Teilframes 110 und 112 ist eine Position, ein Kontrollbit, eine Datenlänge, welche die Länge des C_SDU beschreibt, ein Cycle Counter, ein Datenstatus und ein CRC zugeordnet. Bei der Position handelt es sich dabei um einen eindeutigen Kennzeichner für einen gegebenen Teilframe, wobei die Liste der Teilframes durch einen speziellen Teilframe mit der Positionsnummer 0 abgeschlossen wird.

Der Kontrollbit dient dazu, anzugeben, ob der CRC und Cycle Counter des Teilframes ignoriert werden soll oder nicht.

Der Datenstatus eines Teilframes gibt den Datenstatus des Teilframes an. Der Datenstatus innerhalb des APDU-Status des Frames gibt den Datenstatus des Frames an. Im Falle dessen der Frame aus Teilframes besteht, kann der Datenstatus des Frames ignoriert werden. Ferner ist es hilfreich, den Datenstatus des Frames einem statischen Wert zuzuordnen.

Demgegenüber liegt der Erfindung die Aufgabe zugrunde, ein Verfahren zur optimierten und automatischen Erzeugung von Dynamic Frame Packgruppen zu schaffen sowie eine Vorrichtung zur automatisierten Erzeugung von Dynamic Frame Packgruppen und ein entsprechendes Computerprogrammprodukt zu schaffen.

Die der Erfindung zugrunde liegenden Aufgaben werden mit den Merkmalen der unabhängigen Patentansprüche gelöst. Ausführungsformen der Erfindung sind in den abhängigen Patentansprüchen angegeben.

Es wird ein computerimplementiertes Verfahren zur automatisierten Erzeugung von Dynamic Frame Packgruppen für ein Automatisierungssystem angegeben, wobei das Automatisierungssystem eine Vielzahl von Feldgeräten aufweist, wobei die Feldgeräte verschiedenen Controllern zugewiesen werden können, wobei das Automatisierungssystem zur Kommunikation der Feldgeräte zu den Controllern unter Verwendung von Dynamic Frame Packing vorgesehen ist, wobei das Verfahren die Schritte umfasst:
- Empfang einer Beschreibung der Konfigurationen der Feldgeräte und der Controller,
- automatisches Erstellen der Dynamic Frame Packgruppen durch Analyse der Konfigurationen und Zuordnen der Feldgeräte zu den Packgruppen, wobei im Fall, dass bezüglich einer aktuellen Packgruppe ein topologisch dieser Packgruppe nachfolgendes Feldgerät einen Watchdog-Faktor größer als 31 aufweist, das nachfolgende Feldgerät nicht in die aktuelle Packgruppe aufgenommen. In diesem Fall wird eine neue Packgruppe mit einem Feldgerät begonnen, welches diesem nachfolgenden Feldgerät unmittelbar nachfolgt.

Ausführungsformen der Erfindung haben den Vorteil, dass in automatisierter Weise optimiert Dynamic Frame Packgruppen erzeugt werden können. Anstatt also einem Anwender die Last für die Bildung von DFP-Gruppen aufzubürden, wird ein anderer Ansatz gewählt, der projektierungsfrei ohne jegliche Anwenderaktion durchgeführt wird.

Nach einer Ausführungsform der Erfindung erfolgt die Zuordnung zu Packgruppen in topologischer Reihenfolge vom Controller ausgehend. Dies hat den Vorteil, dass in fehlerfreier Weise eine automatische Berücksichtigung aller Feldgeräte und Controller ermöglicht wird. Anstatt also wahllos Feldgeräte bezüglich einer Zuordnung zu bestimmten Packgruppen zu analysieren, wird die in der Konfigurationsbeschreibung angegebene und festgelegte topologische Reihenfolge der Feldgeräte zur Zuordnung zu Packgruppen verwendet.

Nach einer Ausführungsform der Erfindung beträgt die maximale Anzahl von Feldgeräten in einer Packgruppe 63. Diese Beschränkung ermöglicht eine vollkompatible Verwendung des DFP-Protokolls.

Nach einer weiteren Ausführungsform der Erfindung wird im Falle des Erreichens der maximalen Anzahl von Feldgeräten in einer Packgruppe eine neue Packgruppe begonnen.

Nach einer weiteren Ausführungsform der Erfindung wird für das einem Feldgerät topologisch nachfolgende Feldgerät geprüft, ob es in dieselbe Packgruppe dieses topologisch vorangehenden Feldgerätes aufgenommen werden kann. Das DFP Protokoll ist ausschließlich für topologisch aufeinanderfolgende Feldgeräte definiert; damit sollte eine Packgruppe nicht über ein nicht an der Packgruppen teilnehmendes Feldgerät geführt werden.

Nach einer weiteren Ausführungsform der Erfindung wird im Fall dessen unter einem Feldgerät topologische Verzweigungen vorliegen, die Zuordnung der topologisch nachfolgenden Feldgeräte nur über einen Zweig der topologischen Verzweigungen fortgeführt, wobei für die Feldgeräte in einem nicht fortgeführten Zweig beginnend mit dem der Verzweigung topologisch am nächsten befindlichen Feldgerät neue Packgruppen begonnen werden.

Auch hier gilt, wie bereits oben gesagt, dass das DFP Protokoll ausschließlich für topologisch aufeinanderfolgende Feldgeräte definiert ist. Zudem ist das DFP Protokoll nur für eine Linienstruktur definiert; eine Packgruppe sollte daher keine Verzweigungen beinhalten.

Nach einer weiteren Ausführungsform der Erfindung wird im Fall dessen ein Feldgerät eine Kommunikation unter Verwendung von DFP nicht unterstützt, dieses Feldgerät nicht in eine aktuelle Packgruppe aufgenommen. Stattdessen wird eine neue Packgruppe mit dem Feldgerät begonnen, welches diesem DFP nicht unterstützenden Feldgerät topologisch nachfolgt.

Auch hier gilt, wie bereits oben gesagt, dass das DFP Protokoll ausschließlich für topologisch aufeinanderfolgende Feldgeräte definiert ist; damit sollte eine Packgruppe nicht über ein nicht an der Packgruppen teilnehmendes Feldgerät geführt werden.

Nach einer weiteren Ausführungsform der Erfindung wird im Fall dessen bezüglich einer aktuellen Packgruppe ein topologisch dieser Packgruppe nachfolgendes Feldgerät einem anderen Controller zugewiesen ist als die Feldgeräte in der aktuellen Packgruppe das nachfolgende Feldgerät nicht in die aktuelle Packgruppe aufgenommen. In diesem Fall wird eine neue Packgruppe mit diesem nachfolgenden Feldgerät begonnen.

Der Grund hierfür liegt darin, dass eine Packgruppe immer genau vorzugsweise einem IO Controller zugeordnet ist. Somit ist auch hier eine maximale Kompatibilität für die Verwendung des DFP-Protokolls gewährleistet.

Nach einer weiteren Ausführungsform der Erfindung werden nur Feldgeräte mit identischen Aktualisierungs- und Ansprech-Überwachungszeiten einer gemeinsamen Packgruppe zugeordnet. Im Fall bezüglich einer aktuellen Packgruppe ein topologisch dieser Packgruppe nachfolgendes Feldgerät unterschiedliche Aktualisierungs- und Ansprech-Überwachungszeiten als die Feldgeräte der aktuellen Packgruppe aufweist, wird eine neue Packgruppe mit diesem nachfolgenden Feldgerät begonnen.

Der Grund hierfür liegt darin, dass eine Packgruppe eine gemeinsame Aktualisierungs- und Ansprechüberwachungszeit aufweisen sollte. Da aus Anwendersicht aber die Aktualisierungs- und Ansprechüberwachungszeit am einzelnen Feldgerät projektiert wird, werden nur gleich projektierte Feldgeräte zu einer Packgruppe mit denselben Eigenschaften zusammengeführt.

Der Grund hierfür liegt darin, dass der Faktor für die Ansprechüberwachungszeit bei einer Packgruppe (im Gegensatz zum Faktor bei einem einzeln projektierten Feldgerät) aufgrund des DFP Protokolls nicht höher als 31 sein darf. Da aus Anwendersicht aber die Aktualisierungs- und Ansprechüberwachungszeit am einzelnen Feldgerät projektiert wird, sollte ein Feldgerät mit einer zu hohen Ansprechüberwachungszeit daher nicht Mitglied einer Packgruppe sein.

In einem weiteren Aspekt betrifft die Erfindung ein Computerprogrammprodukt mit von einem Prozessor ausführbaren Instruktionen zur Durchführung der Verfahrensschritte gemäß dem obig beschriebenen Verfahren.

In einem weiteren Aspekt betrifft die Erfindung ein Computersystem zur automatisierten Erzeugung von Dynamic Frame Packgruppen und für ein Automatisierungssystem, wobei das Automatisierungssystem eine Vielzahl von Feldgeräten aufweist, wobei die Feldgeräte verschiedenen Controllern zugewiesen werden können, wobei das Automatisierungssystem zur Kommunikation der Feldgeräte und der Controller unter Verwendung von Dynamic Frame Packing vorgesehen ist, wobei das Computersystem zur Durchführung der folgenden Schritte ausgebildet ist:
- Empfang einer Beschreibung der Konfiguration der Feldgeräte und der Controller,
- automatisches Erstellen der Dynamic Frame Packgruppen durch Analyse der Konfigurationen und Zuordnen der Feldgeräte zu diesem Packgruppen, wobei die Zuordnung der Feldgeräte (100-108; 198-204) zu Packgruppen (150; 206-212) in topologischer Reihenfolge vom Controller ausgehend erfolgt, wobei im Fall, dass an einem Feldgerät topologische Verzweigungen vorliegen die Zuordnung der topologisch nachfolgenden Feldgeräte (100-108; 198-204) nur über einen Zweig der topologischen Verzweigung fortgeführt wird, wobei für die Feldgeräte (100-108; 198-204) in einem nicht fortgeführten Zweig beginnend mit dem der Verzweigung topologisch am nächstem befindlichen Feldgerät neue Packgruppen (150; 206-212) begonnen werden.

Im Folgenden werden bevorzugte Ausführungsformen anhand der Zeichnungen näher erläutert. Es zeigen:
- FIG 3: den Ablauf eines Verfahrens zur Datenübertragung unter Verwendung von DFP,
- FIG 4: ein Beispiel zur Bildung von Packgruppen.

Im Folgenden werden einander ähnliche Elemente mit den gleichen Bezugszeichen gekennzeichnet.

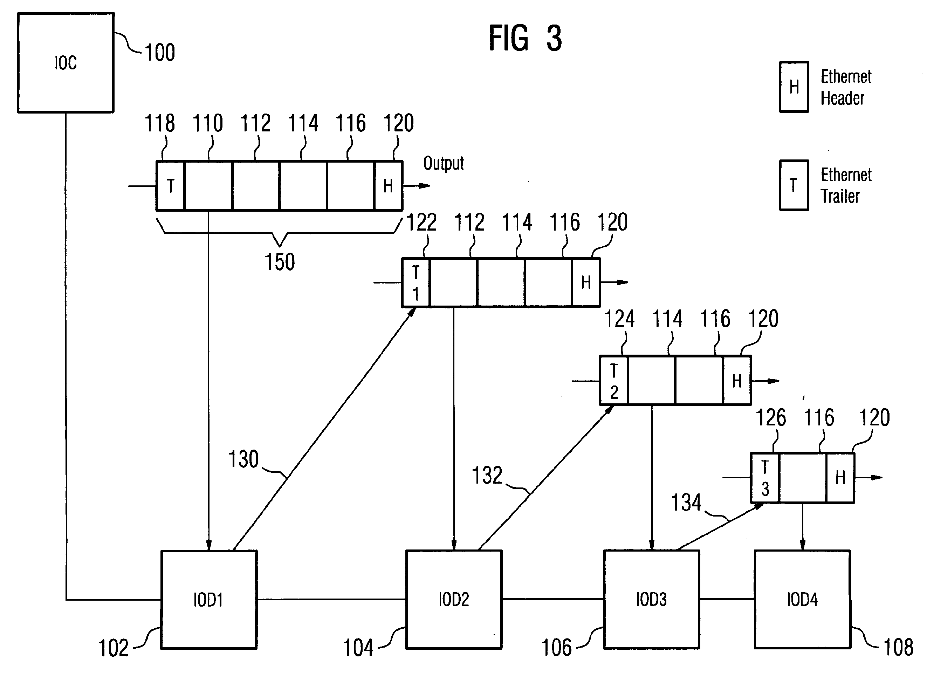

Die FIG 3 zeigt ein Verfahren zur Datenübertragung unter Verwendung von DFP. Im Folgenden wird in dem vorliegenden Beispiel davon ausgegangen, dass in einem Automatisierungssystem neben einem Controller (IOC) 100 vier Feldgeräte (IO devices) 102, 104, 106 und 108 topologisch hintereinander angeordnet sind. Eine Datenübertragung unter Verwendung von Dynamic Frame Packing erfolgt dabei ausgehend von IOC 100 zu den Feldgeräten so, dass der IOC 100 ein Paket an das Feldgerät 102 übermittelt, wobei dieses Paket mehrere Teilframes 110, 112, 114 und 116 aufweist, welche jeweils Nutzerdaten für die Feldgeräte 102, 104, 106 bzw. 108 beinhalten. Der zur Datenübertragung verwendete Container 150 weist neben den Teilframes 110 - 116 auch noch einen Ethernet Header 120 und einen Ethernet Trailer 118 auf.

Nach Empfang des Containers 150 durch das Feldgerät 102 entnimmt das Feldgerät 102 den für ihn bestimmten Teildatenframe 110 und schickt daraufhin in dem mit dem Bezugszeichen 130 gekennzeichneten Schritt ein neues Paket an das Feldgerät 104. Dieses neue Paket weist jedoch nun nicht mehr den Teildatenframe 110 auf, sondern lediglich noch die Teildatenframes 112, 114 und 116, welche für die topologisch nachfolgenden Feldgeräte 104 - 108 bestimmt sind. Der Ethernet Header 120 wird unverändert übernommen, wohingegen ein neuer Ethernet Trailer 122 erzeugt wird und an das Datenpaket angehängt wird.

Nach Empfang dieses so erzeugten Datenpakets durch das Feldgerät 104 entnimmt das Feldgerät 104 den für ihn bestimmten Teildatenframe 112 und erzeugt in Schritt 132 wiederum ein neues Paket, wobei dieses nun nur noch die Teildatenframes 114 und 116 sowie den Ethernet Header 120 aufweist. Ferner weist das so erzeugte Paket auch noch einen neuen Ethernet Trailer 124 auf.

Dieses so erzeugte Paket wird daraufhin wiederum von Feldgerät 106 empfangen, welches den Teildatenframe 114 entnimmt und in Schritt 134 den übrig bleibenden Teildatenframe 116 zusammen mit dem Ethernet Header 120 und einem neuen Ethernet Trailer 126 an das letzte Feldgerät 108 übermittelt.

Damit kann zusammengefasst werden, dass jedes IO-Gerät (jedes Feldgerät 102, 104, 106 und 108) in aufeinander folgender Reihenfolge ausgehend vom Controller 100 mit Frames versorgt wird, wobei nach jedem Empfang des Pakets das besagte Feldgerät das Paket in veränderter Form an das nachgeschaltete Feldgerät weiterleitet.

Das Problem bei DFP ist nun, die Feldgeräte 102 - 108 in geeigneter Weise zu DFP-Gruppen zusammenzufassen, sodass hierbei in optimaler Weise den Anforderungen für eine Echtzeitdatenübertragung und damit einer hohen Datenübertragungsleistung Rechnung getragen werden kann und zudem der Anwender von dieser Optimierung der Zusammenfassung entlastet ist.

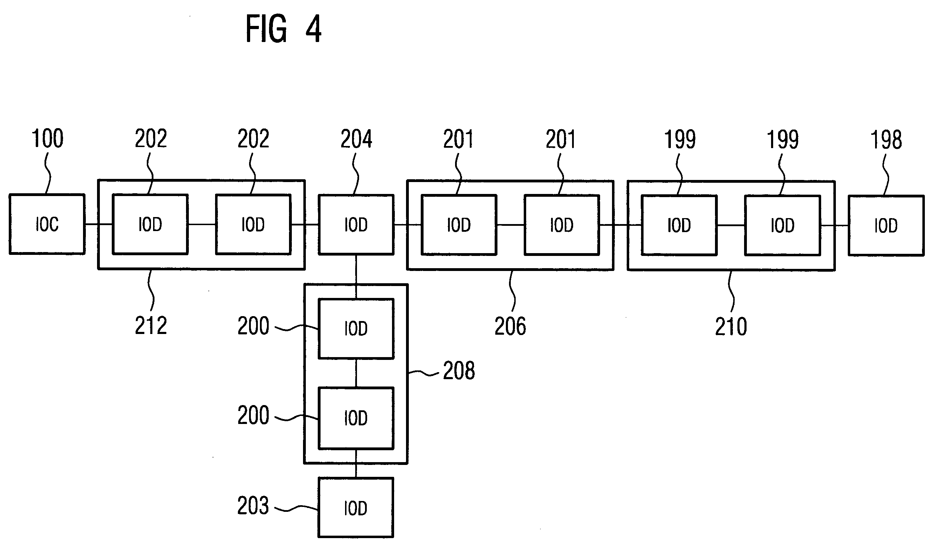

Dieses Verfahren sein nun im Folgenden in Bezug auf FIG 4 näher erläutert. Die FIG 4 zeigt verschiedene Beispiele, wie Packgruppen gebildet werden können. Zunächst zeigt FIG 4 eine Konfiguration von Feldgeräten und Controllern in einer bei der Systemkonzipierung ausgewählten Netzwerktopologie. Einem Controller 100 sind zunächst zwei Feldgeräte 202 topologisch nachgeschaltet, wobei diesen beiden Feldgeräten ein weiteres Feldgerät 204 folgt. Ausgehend von diesem Feldgerät 204 erfolgt eine topologische Verzweigung zum einen in Richtung der Feldgeräte 200 und zum anderen in Richtung der Feldgeräte 201. Die Feldgeräte 200 werden durch ein Feldgerät 203 topologisch abgeschlossen, wohingegen den Feldgeräten 201 ein weiterer Satz von Feldgeräten 199 topologisch folgt. Diese Feldgeräte 199 sind durch ein weiteres Feldgerät 198 topologisch abgeschlossen.

Um nun die bezüglich FIG 3 erläuterte Datenübertragung unter Verwendung von DFP zu ermöglichen, müssen die in FIG 4 gezeigten Feldgeräte geeignet zu Packgruppen zusammengefasst werden. Es erfolgt ein automatisches Erstellen der Dynamic Frame Packgruppen durch Analyse der in FIG 4 gezeigten Topologie sowie der exakten Konfigurationen der gezeigten Feldgeräte und des Controllers.

Beispielhaft kann dabei wie folgt vorgegangen werden:
Die Zuordnung der Feldgeräte zu Packgruppen erfolgt in topologischer Reihenfolge vom Controller ausgehend. In der Ausführungsform der Figur 4 werden die beiden Feldgeräte 202 zu einer Packgruppe 212 zusammengefasst. Das Feldgerät 204 kann nicht in diese Packgruppe 212 integriert werden, da das Feldgerät 204 zwei Netzwerkports für zwei verschiedene Netzwerkzweige aufweist.

Allerdings gibt es hierzu auch die elegante und bevorzugte Alternative, die Packgruppe über einen Port weiterzuführen und am anderen Port eine neue Packgruppe begonnen. Damit kann das Feldgerät 204 in die eine Packgruppe aufgenommen werden (wenn es nicht gegen andere Bedingungen verstößt), die Packgruppe wird über einen Port weitergeführt (z.B. in Richtung der Geräte 201) und am anderen Port (in Richtung der Geräte 200) eine neue Packgruppe begonnen.

Hingegen können wiederum die Feldgeräte 200 zu einer Packgruppe 208 zusammengefasst werden, da die Anzahl der Feldgeräte in diesem Fall nicht die Zahl 63 überschreitet. Dass das Feldgerät 203 nicht der Packgruppe 200 zugeordnet wird, kann verschiedene Gründe haben. Beispielsweise beträgt die Anzahl der Feldgeräte in der Packgruppe 208 exakt 63, sodass für das Feldgerät 203 aufgrund des Überschreitens dieser maximalen Anzahl an Feldgeräten bei Integration mit Packgruppe 208 eine neue Packgruppe begonnen werden muss. Möglich ist jedoch auch, dass das Feldgerät 203 eine Kommunikation unter Verwendung von Dynamic Frame Packing nicht unterstützt, sodass dieses Feldgerät 203 auch nicht in die Packgruppe 208 aufgenommen werden darf. Schließlich ist es auch möglich, dass die Aktualisierungs- und Ansprech-Überwachungszeiten des Feldgeräts 203 sich von den Aktualisierungs- und Ansprech-Überwachungszeiten der Feldgeräte 200 unterscheiden. Wie bereits oben erwähnt ist eine Grundvoraussetzung zur Gruppierung von Feldgeräten in eine gemeinsame Packgruppe, dass alle Feldgeräte innerhalb dieser Packgruppe dieselben identischen Aktualisierungs- und Ansprech-Überwachungszeiten aufweisen.

Schließlich ist es auch noch möglich, dass das Feldgerät 203 nicht in die Packgruppe 208 aufgenommen wurde, da das Feldgerät 203 einen Watchdog-Faktor größer als 31 aufweist.

Da wie bereits oben erwähnt das Feldgerät 204 zwei Ports für zwei verschiedene Netzwerkzweige aufweist, kann nach einer speziellen Ausführungsform eine neue Packgruppe im rechten Zweig der FIG 4 erst mit den Feldgeräten 201 beginnen.

Alternativ wird wie obig beschrieben jedoch die Packgruppe über einen Port weitergeführt und am anderen Port eine neue Packgruppe begonnen.

Der Grund weshalb die den Feldgeräten 201 topologisch nachfolgenden Feldgeräte 199 nicht in die Packgruppe 206 aufgenommen wurden, sondern eine separate Packgruppe 210 für die Feldgeräte 199 gebildet wurde, ist, dass beispielsweise wiederum die Anzahl der Feldgeräte in der Packgruppe 206 die Anzahl von 63 überschreiten würde, wenn zusätzlich die Feldgeräte 199 in die Packgruppe 206 integriert werden würden. Ein anderer Grund könnte beispielsweise wiederum das Vorliegen anderer Aktualisierungs- und Ansprech-Überwachungszeiten der Feldgeräte innerhalb der Gruppe 210 gegenüber den Feldgeräten in der Gruppe 206 sein.

Der rechte Zweig in FIG 4 wird wiederum durch ein Feldgerät 198 abgeschlossen, welches wiederum deshalb nicht in die Packgruppe 210 integriert ist, weil beispielsweise das Feldgerät 198 eine Kommunikation unter Verwendung von DFP nicht unterstützt.

## Patentansprüche

1. Computerimplementiertes Verfahren zur automatisierten Erzeugung von Dynamic Frame Packgruppen (150; 206-212) für ein Automatisierungssystem, wobei das Automatisierungssystem eine Vielzahl von Feldgeräten (100-108; 198-204) aufweist, wobei die Feldgeräte (100-108; 198-204) verschiedenen Controllern (100) zugewiesen werden können, wobei das Automatisierungssystem zur Kommunikation der Feldgeräte (100-108; 198-204) und der Controller (100) unter Verwendung von Dynamic Frame Packing vorgesehen ist, wobei das Verfahren die Schritte umfasst:
- Empfang einer Beschreibung der Konfigurationen der Feldgeräte (100-108; 198-204) und der Controller (100),
- Automatisches Erstellen der Dynamic Frame Packgruppen (150; 206-212) durch Analyse der Konfigurationen und Zuordnen der Feldgeräte (100-108; 198-204) zu Packgruppen (150; 206-212), wobei die Zuordnung der Feldgeräte (100-108; 198-204) zu Packgruppen (150; 206-212) in topologischer Reihenfolge vom Controller ausgehend erfolgt, wobei im Fall, dass an einem Feldgerät topologische Verzweigungen vorliegen die Zuordnung der topologisch nachfolgenden Feldgeräte (100-108; 198-204) nur über einen Zweig der topologischen Verzweigung fortgeführt wird, wobei für die Feldgeräte (100-108; 198-204) in einem nicht fortgeführten Zweig beginnend mit dem der Verzweigung topologisch am nächstem befindlichen Feldgerät neue Packgruppen (150; 206-212) begonnen werden.

2. Verfahren nach Anspruch 1, wobei die maximale Anzahl von Feldgeräten (100-108; 198-204) in einer Packgruppe (150; 206-212) 63 beträgt.

3. Verfahren nach Anspruch 2, wobei im Falle des Erreichens der maximalen Anzahl eine neue Packgruppe (150; 206-212) begonnen wird.

4. Verfahren nach Anspruch 1, wobei für das einem Feldgerät topologisch nachfolgende Feldgerät geprüft wird, ob es in dieselbe Packgruppe (150; 206-212) dieses topologisch vorangehenden Feldgerätes (100-108; 198-204) aufgenommen werden kann.

5. Verfahren nach Anspruch 1, wobei im Fall, dass ein Feldgerät eine Kommunikation unter Verwendung von Dynamic Frame Packing nicht unterstützt das Feldgerät nicht in eine aktuelle Packgruppe (150; 206-212) aufgenommen wird und stattdessen eine neue Packgruppe (150; 206-212) wird mit dem Feldgerät begonnen wird, welches diesem Feldgerät topologisch nachfolgt.

6. Verfahren nach Anspruch 1, wobei im Fall, dass bezüglich einer aktuellen Packgruppe (150; 206-212) ein topologisch dieser Packgruppe (150; 206-212) nachfolgendes Feldgerät einem anderen Controller (100) zugewiesen ist als die Feldgeräte (100-108; 198-204) in der aktuellen Packgruppe (150; 206-212) das nachfolgende Feldgerät nicht in die aktuelle Packgruppe (150; 206-212) aufgenommen wird, wobei in diesem Fall eine neue Packgruppe (150; 206-212) mit diesem nachfolgenden Feldgerät begonnen wird.

7. Verfahren nach Anspruch 1, wobei nur Feldgeräte (100-108; 198-204) mit identischen Aktualisierungs- und Ansprechüberwachungszeiten einer gemeinsamen Packgruppe (150; 206-212) zugeordnet werden, wobei im Fall, dass bezüglich einer aktuellen Packgruppe (150; 206-212) ein topologisch dieser Packgruppe (150; 206-212) nachfolgendes Feldgerät unterschiedliche Aktualisierungs- und Ansprechüberwachungszeiten als die Feldgeräte (100-108; 198-204) in der aktuellen Packgruppe (150; 206-212) aufweist, eine neue Packgruppe (150; 206-212) mit diesem nachfolgenden Feldgerät begonnen wird.

8. Verfahren nach Anspruch 1, wobei im Fall, dass bezüglich einer aktuellen Packgruppe (150; 206-212) ein topologisch dieser Packgruppe (150; 206-212) nachfolgendes Feldgerät einen Watchdog-Faktor größer als 31 aufweist das nachfolgende Feldgerät nicht in die aktuelle Packgruppe (150; 206-212) aufgenommen wird, wobei in diesem Fall eine neue Packgruppe (150; 206-212) mit einem Feldgerät begonnen wird welches diesem nachfolgenden Feldgerät nachfolgt.

9. Computerprogrammprodukt mit von einem Prozessor ausführbaren Instruktionen zur Durchführung der Verfahrensschritte gemäß den vorigen Ansprüchen.

10. Computersystem zur automatisierten Erzeugung von Dynamic Frame Packgruppen (150; 206-212) für ein Automatisierungssystem, wobei das Automatisierungssystem eine Vielzahl von Feldgeräten (100-108; 198-204) aufweist, wobei die Feldgeräte (100-108; 198-204) verschiedenen Controllern (100) zugewiesen werden können, wobei das Automatisierungssystem zur Kommunikation der Feldgeräte (100-108; 198-204) und der Controller unter Verwendung von Dynamic Frame Packing vorgesehen ist, wobei das Computersystem zur Durchführung der folgenden Schritte ausgebildet ist:
- Empfang einer Beschreibung der Konfigurationen der Feldgeräte (100-108; 198-204) und der Controller (100),
- Automatisches Erstellen der Dynamic Frame Packgruppen (150; 206-212) durch Analyse der Konfigurationen und Zuordnen der Feldgeräte (100-108; 198-204) zu Packgruppen (150; 206-212), wobei die Zuordnung der Feldgeräte (100-108; 198-204) zu Packgruppen (150; 206-212) in topologischer Reihenfolge vom Controller ausgehend erfolgt, wobei im Fall, dass an einem Feldgerät topologische Verzweigungen vorliegen die Zuordnung der topologisch nachfolgenden Feldgeräte (100-108; 198-204) nur über einen Zweig der topologischen Verzweigung fortgeführt wird, wobei für die Feldgeräte (100-108; 198-204) in einem nicht fortgeführten Zweig beginnend mit dem der Verzweigung topologisch am nächstem befindlichen Feldgerät neue Packgruppen (150; 206-212) begonnen werden.

## Claims

1. Computer-implemented method for automatically generating dynamic frame packing groups (150; 206-212) for an automation system, the automation system having a plurality of field devices (100-108; 198-204), it being possible for the field devices (100-108; 198-204) to be assigned to different controllers (100), the automation system being provided for communication of the field devices (100-108; 198-204) and the controllers (100) using dynamic frame packing, the method comprising the steps:
- reception of a description of the configurations of the field devices (100-108; 198-204) and of the controllers (100),
- automatic generation of the dynamic frame packing groups (150; 206-212) by analysing the configurations and assigning the field devices (100-108; 198-204) to packing groups (150; 206-212), the assignment of the field devices (100-108; 198-204) to packing groups (150; 206-212) being effected in topological order starting from the controller, the assignment of the topologically following field devices (100-108; 198-204) being continued only via one branch of the topological divergence if topological divergences are present at a field device, new packing groups (150; 206-212) being started for the field devices (100-108; 198-204) in a branch which is not continued, starting with the field device topologically closest to the divergence.

2. Method according to claim 1, the maximum number of field devices (100-108; 198-204) in a packing group (150; 206-212) being 63.

3. Method according to claim 2, a new packing group (150; 206-212) being started if the maximum number is reached.

4. Method according to claim 1, a check being made for the field device topologically following a field device as to whether it can be included in the same packing group (150; 206-212) as this topologically preceding field device (100-108; 198-204).

5. Method according to claim 1, the field device not being included in a current packing group (150; 206-212) if a field device does not support communication using dynamic frame packing, and instead a new packing group (150; 206-212) being started with the field device which topologically follows this field device.

6. Method according to claim 1, the following field device not being included in the current packing group (150; 206-212) if in respect of a current packing group (150; 206-212) a field device topologically following this packing group (150; 206-212) is assigned to a different controller (100) than the field devices (100-108; 198-204) in the current packing group (150; 206-212), a new packing group (150; 206-212) being started in this case with this following field device.

7. Method according to claim 1, only field devices (100-108; 198-204) with identical refreshment and watchdog times being assigned to a common packing group (150; 206-212), a new packing group (150; 206-212) being started with this following field device if in respect of a current packing group (150; 206-212) a field device topologically following this packing group (150; 206-212) has different refreshment and watchdog times than the field devices (100-108; 198-204) in the current packing group (150; 206-212).

8. Method according to claim 1, the following field device not being included in the current packing group (150; 206-212) if in respect of a current packing group (150; 206-212) a field device topologically following this packing group (150; 206-212) has a watchdog factor greater than 31, a new packing group (150; 206-212) being started in this case with a field device which follows this following field device.

9. Computer program product with instructions which can be executed by a processor for performing the method steps in accordance with the preceding claims.

10. Computer system for automatically generating dynamic frame packing groups (150; 206-212) for an automation system, the automation system having a plurality of field devices (100-108; 198-204), it being possible for the field devices (100-108; 198-204) to be assigned to different controllers (100), the automation system being provided for communication of the field devices (100-108; 198-204) and the controllers using dynamic frame packing, the computer system being designed to perform the following steps:
- reception of a description of the configurations of the field devices (100-108; 198-204) and of the controllers (100),
- automatic generation of the dynamic frame packing groups (150; 206-212) by analysing the configurations and assigning the field devices (100-108; 198-204) to packing groups (150; 206-212), the assignment of the field devices (100-108; 198-204) to packing groups (150; 206-212) being effected in topological order starting from the controller, the assignment of the topologically following field devices (100-108; 198-204) being continued only via one branch of the topological divergence if topological divergences are present at a field device, new packing groups (150; 206-212) being started for the field devices (100-108; 198-204) in a branch which is not continued, starting with the field device topologically closest to the divergence.

## Revendications

1. Procédé mis en oeuvre par ordinateur de production automatique de groupes ( 150; 206 à 212 ) de dynamic frame packing pour un système d'automatisation, dans lequel le système d'automatisation a une pluralité d'appareils ( 100 à 108; 198 à 204 ) de terrain, les appareils ( 100 à 108; 198 à 204 ) de terrain pouvant être affectés à des unités ( 100 ) de commande différentes, le système d'automatisation étant prévu pour la communication des appareils ( 100 à 108; 198 à 204 ) de terrain et des unités ( 100 ) de commande en utilisant dynamic frame packing, le procédé comprenant les stades suivantes :
réception d'une description des configurations des appareils ( 100 à 108; 198 à 204 ) de terrain et des unités ( 100 ) de commande,
création automatique des groupes ( 150; 206 à 212 ) de dynamic frame packing par analyse des configurations et affectation des appareils ( 100 à 108; 198 à 204 ) de terrain à des groupes ( 150; 206 à 212 ) de packing, l'affectation des appareils ( 100 à 108; 198 à 204 ) de terrain à des groupes ( 150; 206 à 212 ) de packing s'effectuant à partir d'une succession topologique d'unités de commande, dans lequel, s'il y a des bifurcations topologiques sur un appareil de terrain, on ne poursuit l'affectation des appareils ( 100 à 108; 198 à 204 ) suivant topologiquement que par une branche de la bifurcation topologique en commençant, pour les appareils ( 100 à 108; 198 à 204 ) de terrain dans une branche non poursuivie, des groupes ( 150; 206 à 212 ) nouveaux de packing nouveaux par l'appareil de terrain se trouvant le plus près topologiquement de la bifurcation.

2. Procédé suivant la revendication 1, dans lequel le nombre maximum d'appareils ( 100 à 108; 198 à 204 ) de terrain dans un groupe ( 150; 206 à 212 ) de packing est de 63.

3. Procédé suivant la revendication 2, dans lequel, si l'on atteint le nombre maximum, on commence un groupe ( 150; 206 à 212 ) nouveau de packing.

4. Procédé suivant la revendication 1, dans lequel on contrôle pour l'appareil de terrain suivant topologiquement un appareil de terrain s'il peut être reçu dans le même groupe ( 150; 206 à 212 ) de packing que cet appareil ( 100 à 108; 198 à 204 ) de terrain le précédant topologiquement.

5. Procédé suivant la revendication 1, dans lequel, si un appareil de terrain n'assiste pas une communication en utilisant le dynamic frame packing, on ne reçoit pas l'appareil de terrain dans un groupe ( 150; 206 à 212 ) de packing présent et, au lieu de cela, on commence un groupe ( 150; 206 à 212 ) nouveau de packing avec l'appareil de terrain qui suit topologiquement cet appareil de terrain.

6. Procédé suivant la revendication 1, dans lequel, si, par rapport à un groupe ( 150; 206 à 212 ) de packing présent, un appareil de terrain suivant topologiquement ce groupe ( 150; 206 à 212 ) de packing est affecté à une autre unité ( 100 ) de commande que les appareils ( 100 à 108; 198 à 204 ) de terrain du groupe ( 150; 206 à 212 ) présent de packing, on ne reçoit pas l'appareil de terrain suivant dans le groupe ( 150; 206 à 212 ) présent de packing en commençant, dans ce cas, un groupe ( 150; 206 à 212 ) nouveau de packing par cet appareil de terrain suivant.

7. Procédé suivant la revendication 1, dans lequel on n'affecte que des appareils ( 100 à 108; 198 à 204 ) de terrain ayant des temps identiques de mise à jour et de contrôle de réponse à un groupe ( 150; 206 à 212 ) commun de packing, dans lequel, si, par rapport à un groupe ( 150; 206 à 212 ) présent de packing, un appareil de terrain suivant topologiquement ce groupe ( 150, 206 à 2012 ) de packing a des temps de mise à jour et de contrôle de réponse différents de ceux des appareils ( 100 à 108; 198 à 204 ) de terrain du groupe ( 150; 206 à 212 ) présent de packing, on commence un groupe ( 150; 206 à 212 ) nouveau de packing par cet appareil de terrain suivant.

8. Procédé suivant la revendication 1, dans lequel, si, par rapport à un groupe ( 150; 206 à 212 ) présent de packing, un appareil suivant topologiquement ce groupe ( 150; 206 à 212 ) de packing a un facteur de chien de garde plus grand que 31, on ne reçoit pas l'appareil de terrain suivant dans le groupe ( 150; 206 à 212 ) présent de packing, en commençant dans ce cas un groupe ( 150; 206 à 212 ) nouveau de packing par cet appareil de terrain qui suit cet appareil de terrain suivant.

9. Produit de programme d'ordinateur ayant des instructions pouvant être exécutées par un processeur pour effectuer les stades du procédé suivant les revendications précédentes.

10. Système d'ordinateur de production automatique de groupe ( 150; 206 à 212 ) de dynamic frame packing pour un système d'automatisation, dans lequel le système d'automatisation a une pluralité d'appareils ( 100 à 108; 198 à 204 ) de terrain, les appareils ( 100 à 108; 198 à 204 ) de terrain pouvant être affectés à des unités ( 100 ) différentes de commande, le système d'automatisation étant prévu pour la communication des appareils ( 100 à 108; 198 à 204 ) de terrain et des unités de commande en utilisant le dynamic frame packing, le système d'ordinateur étant constitué pour effectuer les stades suivantes :
réception d'une description des configurations des appareils ( 100 à 108; 198 à 204 ) de terrain et des unités ( 100 ) de commande,
création automatique des groupes ( 150; 206 à 212 ) de dynamic frame packing par analyse des configurations et affectation des appareils ( 100 à 108; 198 à 204 ) de terrain à des groupes ( 150; 206 à 212 ) de packing et l'affectation des appareils ( 100 à 108; 198 à 204 ) de terrain à des groupes ( 150; 206 à 212 ) de packing s'effectuant à partir d'une succession topologique d'unités de commande, dans lequel, s'il y a des bifurcations topologiques sur un appareil de terrain, on ne poursuit l'affectation des appareils ( 100 à 108; 198 à 204 ) suivant topologiquement que par une branche de la bifurcation topologique en commençant, pour les appareils ( 100 à 108; 198 à 204 ) de terrain dans une branche non poursuivie, des groupes ( 150; 206 à 212 ) nouveaux de packing par l'appareil de terrain se trouvant le plus près topologiquement de la bifurcation.
